(19) Europäisches Patentamt
European Patent Office
Office européen des brevets

(11) **EP 2 741 251 A1**

(12) **EUROPEAN PATENT APPLICATION**

(43) Date of publication:
**11.06.2014 Bulletin 2014/24**

(51) Int Cl.:
***G06Q 40/04*** (2012.01)      ***G06Q 10/06*** (2012.01)
***G06Q 40/06*** (2012.01)

(21) Application number: **14156138.1**

(22) Date of filing: **22.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **22.12.2008 US 139809 P**

(62) Document number(s) of the earlier application(s) in accordance with Art. 76 EPC:
**09835790.8 / 2 353 137**

(71) Applicant: **Crystal World Holdings, Inc.**
**Washington, DC 20006 (US)**

(72) Inventors:
• **Rabalais, Christopher Paul**
**Humble, TX 77346 (US)**

• **Brown-Hruska, Sharon, Joy**
**Burke, VA 22015 (US)**
• **Ozgit, Emin, Alper**
**Northbrook, IL 60062-5758 (US)**
• **Guth, Louis**
**Jupiter, FL 33458 (US)**
• **Duran, Carlos, Miguel Jr.**
**Casa 4 Rio de Oro-Santa Ana (CR)**

(74) Representative: **Hutchinson, Thomas Owen**
**Hutchinson IP Ltd**
**57 Hoghton Street**
**Southport PR9 0PG (GB)**

Remarks:
This application was filed on 21-02-2014 as a divisional application to the application mentioned under INID code 62.

(54) **Systems and methods for risk management of sports-associated businesses**

(57)      This invention provides risk management systems and methods for enterprises associated with a wide variety of sports activities, e.g., sports having individual athlete participants as well as sports having team participants; sports activities having regional, national, or international scope; professional and non-professional sports activities; and so forth. In preferred embodiments, the systems and methods of this invention derive models of the economic values and of associated economic risks of particular sports activities and provide indices reflecting model computations. In further preferred embodiments, the system and method of this invention provide financial instruments having values that derive from one of the provided indices, index computing systems, and exchange or trading platform systems by which such derivative contacts can be valued and traded.

FIG. 1.

EP 2 741 251 A1

**Description**

FIELD OF THE INVENTION

The present invention concerns management of risk for sports-associated businesses, and preferred embodiment relate to calculating a financial index, or more particularly relate to calculating a sports-based financial index (referred to herein as a "sports risk index" or "SRI"), on which futures and options or other derivatives contracts may be traded.

BACKGROUND OF THE INVENTION

The sports industry has developed and grown as a major area of business enterprise. The sports industry includes a host of enterprises beyond the actual participants (i.e., individual participants (athletes), team (also known as clubs) participants, association of teams (or leagues)) that compete. It includes among others, sporting goods and apparel manufacturers and distributors, merchandisers, concessionaires, sponsors and advertisers, media and entertainment companies and facility management companies. It also includes other businesses and stakeholders that locate in the vicinity of a stadium such as restaurants, parking facilities and other entertainment venues. Municipalities and public taxing authorities may also have a commercial interest in the business operations of a stadium. The sports industry has developed and grown to such an extent that it can no longer be considered simply from an entertainment point of view. More and more studies and books discuss the business behind sports rather than the sports themselves. Sports Business Management has grown to be a separate field in the undergraduate and graduate programs of many universities. Thus, the sports industry encompasses much more than the participants in the sports themselves - it includes sporting goods and apparel manufacturers and distributors, merchandisers, concessionaires, sponsors and advertisers, media and entertainment companies, facility management companies, and many other interested parties and stakeholders.

Just like firms in other more traditional industries, businesses underpinning the sports industry face risks with financial consequences. The fact that these risks are not directly related to more common risk factors such as commodity prices (i.e. oil prices), interest rates, the foreign exchange rates, and the like does not make them less significant. It simply means that a novel approach is needed to deliver risk management options to the companies that face such risks.

There is often a strong relationship between the economic and commercial values of sports participants (individuals, teams, leagues, and the like) and the risks that different businesses in the sports industry face. All of these businesses depend in one way or another on the number of fans that support the participants and the sport, and the amount of public interest in general. When a particular sport or sports team experiences an economic decline, whether due to a loss of popularity, perceived lack of integrity, or other reasons, many and varied related businesses may suffer decline in revenues and value. This can happen in various ways such as decreases in ticket (gate) receipts, concession revenues or sales of licensed merchandise, or reduced benefits from advertising and sponsorship contracts.

It is noted that individual sports participants, e.g., athletes, and associations of sports participants, e.g., sports teams, are often organized as franchises or members of an umbrella organization, e.g., a sports league, a sports conference, an organizing committee, or the like. The umbrella organization often controls the trademarks and other indicia of public recognition of the sport. However, for compactness and simplicity in the following, the terms "franchise", "member", and the like are to be understood as referring to individual sports participants or to associations of individual participants, respectively, regardless of the particular commercial or business organizational context, which in the context of the present invention, is of only secondary importance.

The financial services industry has developed systems, methods, and products that enable enterprises to manage certain of their risks. Such products include futures contracts, options, and other derivatives having values based to some extent on the risk sought to be managed. In the financial services industry, a futures contract (or futures) is a contract to buy or sell a quantity of a specified commodity for future delivery or final settlement date at a price determined at the time of contract initiation. Futures contracts are settled by delivery of the contracted-for commodity, cash-settlement or by off-set and used for hedging to for assuming risk. The futures price is typically determined by the instantaneous equilibrium between supply and demand among competing buy and sell orders on the exchange at the time of the purchase or sale of the contract.

Futures contracts are typically traded on a futures exchange, which typically includes a clearinghouse. Among other of its roles, the exchange's clearinghouse through a process of novation of trades generally functions as the central, or universal counterparty (i.e., the buyer to every seller and the seller to every buyer), to all trades executed on the exchange and provides a mechanism for settlement of futures contracts.

Futures contracts generally come in two varieties, one of which involves physical delivery of the underlying commodity. The other type of futures contact, a cash-settled futures contract, involves a cash payment based on the final settlement price of the futures contract (e.g., the final value of the contract at the time of contract expiration.).. A more particular variety of cash-settled futures contracts, index futures contracts are contracts to buy or sell a fixed value of an underlying index, for example, a stock index, and are often traded in terms of a (notional) multiplier times the value of the index. In this regard, the value of each contract may be defined as the product of a fixed (notional) monetary value and the value of the index, usually expressed as Index points (i.e., Contract Value = $ x Index Value).

An options contract is entered into by a buyer and a seller whereby the seller, in exchange for a cash payment (referred to as a premium), grants the buyer the right, but not the obligation, to buy or sell a specified commodity or interest at a later date at a price agreed to today. In index options, the underlying is the value of the index itself. Index options may be cash settled, as described above. A call option on an index gives the buyer the right to receive the difference between the multiplier times the value of the index and the agreed-upon price, referred to as the strike price. An index put option gives the buyer the right to receive the same difference from the seller at his exercise, which would be positive when the underlying index declines below a predetermined strike price. An option on a futures contract gives the option buyer the right to receive a position in a cash-settled futures contract.

Derivatives contracts may also be traded off of an exchange in what is commonly referred to as the "over-the-counter" (OTC) market. Such contracts provide for economic returns similar to those of exchange-traded futures or options contracts, but are executed bi-laterally or on a multilateral trading platform between contract principals. Like futures contracts, OTC derivatives derive their value from an underlying instrument or reference price or value. Upon expiration, OTC derivatives can be settled by physical delivery of an underlying instrument or by cash-settlement to a reference price. OTC derivatives typically carry credit-risk of the counterparties to the agreement, but some OTC derivatives are capable of being cleared, resulting in the substitution of the credit risk of the clearinghouse for that of each counterparty to the other.

SUMMARY OF THE INVENTION

Preferred embodiments of the present invention provide sports-based indices of economic value and/or of associated economic risk; the indices are preferably provided so as to be suitable for basing tradable futures, options, and other types of derivatives contracts, which can be used to hedge sports-related business risks by techniques already known in the financial arts. Preferred embodiments also provide futures, options, and other types of derivatives contracts which are based and valued in dependence on sports-based economic value and/or risk indices.

Preferred embodiments also provide computer systems for deriving and calculating the provided indices and further computer system for trading and exchange of the provided derivative contracts. The provided trading systems are generally configured similarly to systems known in the art for trading and exchange of similar derivative contracts. In less preferred embodiments, the derivative contracts of this invention are traded in an OTC manner. The provided derivative contracts and trading systems can be used to hedge sports-related business risks because they are based on sports-risk indices (SRI) that reflect relevant sports economic values and/or associated economic risks. In different preferred embodiments, the values reflected can be those of a sports activity (e.g., sports participants, sport teams, entire sports, and the like) itself or those of businesses associated with the sports activity. It is believed that these different values/risks are correlated so that indices provided by such different preferred embodiments are, practically, closely similar. Accordingly, the invention as described herein includes: SRIs constructed primarily to reflect variables describing economic and risk data describing the sports activity itself; SRIs constructed primarily to reflect variables describing economic and risk data describing businesses associated with the sports activity; and SRIs constructed to reflect variables describing both types of economic and risk data.

Preferably, such SRIs are constructed from and computed by models on the basis of input factors explanatory or determinative of economic value or risk which are captured by explanatory or determining variables known in the sports arts and businesses or variables that have been demonstrated by econometric analysis to affect the values and risks relevant to a particular SRI. Preferably, these variables are reflective of the main channels through which sports participants generate revenues and income and include fundamental market conditions and specific income-related factors. These latter economic and risk variables are referred to herein as input variables (or alternatively, as "explanatory" or "determinative" variables).

A statistical model based on such input variables that are explanatory or determinative of value or risk can therefore provide as output indices of participant value and associated risks for prospective investors, sports owners, sports leagues, and other businesses facing sports-related risks. In preferred embodiments, the invention can provide a plurality of SRIs, where each SRI is compiled to relate to the value of a particular sports activity.

Input variables can represent more tangible and more intangible factors. More tangible factors include economic and demographic factors (and their changes over time), including per capita income levels and population, that are common economic parameters and that have been found to also have explanatory power as a mechanism to estimate values and associated risks of sports participant (e.g., sports team of sports franchise). In the case of regional sports teams, such population and income data preferably relates to the teams' regional areas. In the case of national or supra-national sports activities, teams, and the like, such population and income data preferably relates to populations ("fans") having an interest in the activity.

In addition, specific sports-activity income-related factors include revenue streams derived from ticket (e.g., "gate") receipts, sponsorship contracts, media contracts, and the like. These factors can be captured by including variables that are relevant to explaining both current earnings (e.g., attendance through its impact on ticket revenues), and expected future earnings (e.g., media ratings through their impact on future media revenues).

More intangible variables (i.e., customer tastes and preferences concerning a sport, a sports team, or a sports participant) can also be relevant when assessing future revenue and profit streams of a business. The intangible value of a sports team or individual sport participant from a business standpoint relates to the ability of this team or individual to attract customers and generate interest that stimulates commercial activities. Generally, through its various tangible components, the index can tracks the strength of customer (fan) interest and loyalty to the team's brand or individual's reputation.

However, in certain cases it can be advantageous to include intangible data directly. Survey data, polling data, and the like can be relevant for applications of the index of this invention to provide risk management alternatives and advice privately to businesses. But such data is preferably omitted from indices intended for publicly traded financial instruments because certain types of such intangible data are often insufficiently objective, verifiable, quantitative, or the like for inclusion in an index that is intended for use in connection public dissemination and reliance, e.g., in connection with publicly traded financial instruments.

Preferably, in the context of statistical SRI models, the number and types of input or explanatory variables can be selected in dependence, at least in part, on the statistical explanatory power. For example, it is preferred to include input explanatory variables that have a large effect on the SRI output values and neglect input explanatory variables with only a small effect. More precisely, input explanatory variables can be included in order of their ability to explain variance of the SRI values up to a selected variance threshold (e.g., 95%). According to preferred embodiments of the present invention, then, input explanatory variables underlying the index can include (but are not limited to) economic and demographic information, attendance, TV viewing ratings, financial or cost related information, and factors related to revenue generation by the sports industry including public preferences and tastes, economic and demographic information, attendance, TV viewing ratings, and other factors. Inclusion of these variables results in the creation of an SRI that is therefore less susceptible to manipulation since the underlying variables are independently influenced by a number of factors and are derived from independent sources, and that has properties that are associated with successful derivative contracts, including price discovery and hedging utility. As a source of information regarding sports-related financial activity, the SRI can be used to effectively hedge advertising, merchandising, concessions revenue, and various other sports-related business pursuits.

The preferred, sports risk index (SRI) derivative contracts provided by the present invention are similar in design and operation to existing index derivative contracts (e.g., cash-settled futures and option contracts such as stock or bond index contracts), but that are based on underlying indices (SRI) that track economic factors that can be used to hedge risks faced by businesses in and related to sports. SRI derivative contracts can include contracts that convey to the buyer the right to receive from the seller the difference between a multiplier (also referred to herein as a "notional" multiplier or "notional" factor) times the value of the index upon contract creation or times the current value of the index and a strike price (or "strike" index value), or some other value, or in the case of an option on a future, to demand delivery from the seller of an SRI futures contract or its cash equivalent. In this regard, SRI futures and options can be used by organizations or individuals as a part of their risk management strategy to reduce risk associated with unexpected or adverse economic developments related to a sports franchise or a sport in general. Futures contracts on the SRI can make it possible for interested parties to hedge some of their sports-related economic risks.

In preferred embodiments, the SRI index is represented as an index model that can be used by a programmable device, such as a computer system, to automatically determine index values from the sports value and risk explanatory or determining variables. Typically, index values are determined more frequently, e.g., daily or weekly (but only upon the availability of updated input value and/or risk explanatory or determining variables), and made available or communicated to the trading and exchange system in order to value derivative contracts based thereon. Prior to such use, however, the model is derived or updated by comparing sports economic value variables with concurrent value or risk explanatory or determining variables.

In preferred embodiments, the model is defined by parameters or coefficients (e.g., regression coefficients) determined according to, for example, automatic statistical methods as explained subsequently. Typically, model derivation or update is performed less frequently, e.g., monthly or yearly. Model definitions are stored after derivation so that they can be repeatedly retrieved and applied to new sets of input variables.

Model derivation or update takes into account that the identities and relationships of the defining input variables can change over time and provides a mechanism (e.g., a periodic reset that may be daily or weekly but is preferably monthly or less frequently) to ensure that the index captures the effect of such changes. In addition, the mechanism ensures that the futures price converges to the index price, since payouts may be made based on the calculated value of the index.

According to additional selected preferred embodiments, the present invention provides a method according to which a processor receives data for a plurality of input variables relevant to one or both of current or future earnings of a sports franchise, the variables including one or more of an attendance at games of the sports franchise, a population in a geographic area including the sports franchise, an income of the population in the geographic area including the sports franchise, a presence or absence of another sports franchise in the geographic area including the sports franchise, or ratings of broadcast of games of the sports franchise. Further, the processor derives from the data, an algorithm for calculating a sports risk index value for the sports franchise as a function of the one or more of above variables. Specifically, the algorithm can preferably provide a sports risk index value on which exchange-traded futures or options or over-the-counter derivatives contracts are traded and which can be used to hedge or manage economic risks faced by businesses in and related to the sports franchise and for others to assume those risks.

In selected preferred embodiments, the present invention also provides an apparatus having a processor configured to perform the methods of this invention and a computer-readable storage medium having computer-readable program code portions for causing a processor to perform the methods of this invention.

As indicated above and explained in greater detail below, the apparatus, method and computer program product of exemplary embodiments of the present invention may solve the problems identified by prior techniques and may provide additional advantages.

BRIEF DESCRIPTION OF THE DRAWINGS

Having thus described preferred and exemplary embodiments of the present invention in general terms, reference will now be made to the accompanying drawings, which are not necessarily drawn to scale, and wherein:

FIG. 1 is a schematic block diagram of a system for trading a futures or options contract whose value is calculated in accordance with exemplary embodiments of the present invention;

FIG. 2 is a schematic block diagram of an apparatus that may be configured to operate as a futures contract buyer, seller or exchange, in accordance with exemplary embodiments of the present invention;

FIG. 3 is a flowchart illustrating various steps in formulating a sports risk index (SRI) model or algorithm, in accordance with exemplary embodiments of the present invention;

FIG. 4 is a flowchart illustrating various steps in a method of calculating an SRI value for a sports activity (e.g. an individual or team sports participant), in accordance with exemplary embodiments of the present invention;

FIGS. 5 and 6 are graphs tracking the SRI values for different sports participants, here sports teams, over a period of time, in accordance with exemplary embodiments of the present invention; and

FIGS. 7A-F illustrate an exemplary order process of the present invention.

DETAILED DESCRIPTION OF PREFERRED EMBODIMENTS OF THE INVENTION

Preferred embodiments of the present invention now will be described more fully hereinafter with reference to the accompanying drawings. This invention can, however, be embodied in many different forms and should not be construed as limited to the preferred embodiments set forth herein; rather, these preferred embodiments are provided so that this disclosure will be thorough and complete, and will fully convey the scope of the invention to those skilled in the art. Like numbers refer to like elements throughout.

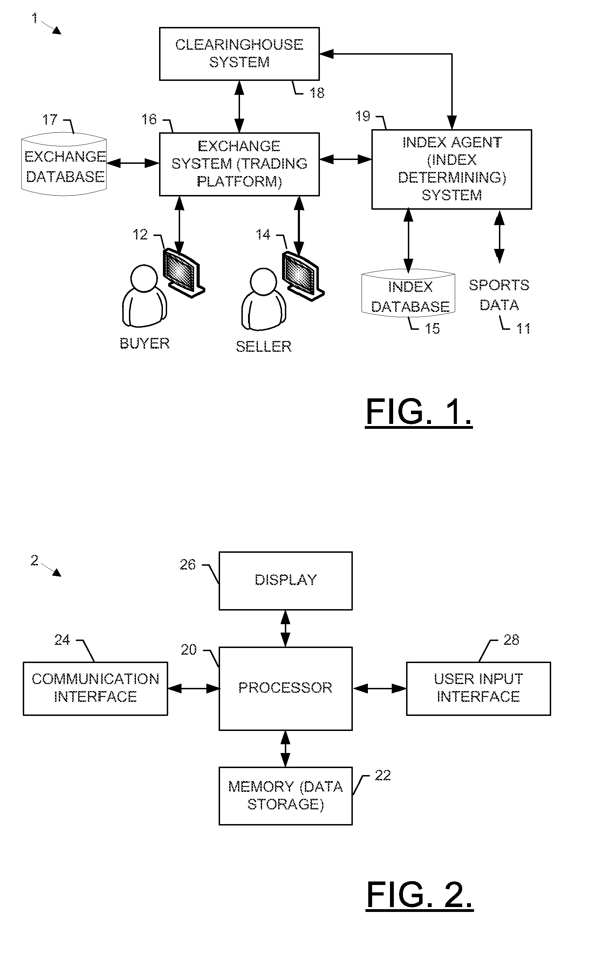

Referring to FIG. 1, system 1 provides one or more sports risk indices (SRIs) and derivative contracts (e.g., future or option contracts) whose values derive from the provided SRIs. System 1 preferably includes: one or more terminals 12 and 14 or other interfaces for users of the system who can act to buy or sell the traded derivative contracts; exchange system 16 (along with one or more exchange databases 17) which acts as a trading platform for the derivative contracts; clearinghouse system 18 which acts to carry out transfers of contracts between buyers and sellers and to insure accompanying payment (or otherwise provides such clearinghouse services); and index agent system 19 (along with one or more index databases 15) which acts to receive sports value and associated risk data 11 (e.g. variables describing economic values and/or risks of a sports activity or team and variables likely to explain or determine the such values and risks) and to derive and apply one or more SRI index models (or otherwise provides index determining services). As shown and described herein, user interfaces, exchange system, clearinghouse system and index agent system are preferably configured to directly and/or indirectly communicate with one another, across one or more networks (not shown) such as one or more fixed or wireless local area networks (LANs), wide area networks (WAN) (e.g., the Internet) or the like (also one or more wireline and/or wireless voice networks).

In preferred embodiments, users operate respective processing apparatuses or terminals as front-end interfaces to exchange system 16 through which buy or sell orders for future or option (generally, derivative) contracts can be communicated with the exchange 16. The exchange, in turn, receives and stores buy and sell orders (e.g., in exchange database 17), and matches when possible stored buy orders with stored sell orders according to matching algorithms known in the art of trading systems. The clearinghouse 18 preferably acts as a universal counterparty to the traded future or option contracts (if necessary, by novating transactions of the buyer and seller) to fulfill matched buy and sell orders. Contracts settlement values are preferably calculated in dependence on the type of contracts and on values of the appropriate SRI index that are specified by the contract and that are provided by index agent 19 to the clearinghouse (and exchange) by communication means.

In preferred embodiments, user terminals 12 and 14, exchange system 16, clearinghouse system 18 and index agent system 19 can comprise any one or more of a number of different apparatuses, devices or the like configured to operate in accordance with preferred embodiments of the present invention. For example, user terminals can comprise, include or be embodied in portable or non-portable processing apparatuses such as one or more of a laptop computer, desktop computer, server computer, a mobile telephone, a portable digital assistant (PDA), and the like. These processing apparatuses communicate information with the exchange or trading platform system across networks such as the Internet. For example, buyers and sellers transmit information to the exchange including their buy and sell orders, and the like, and receive information from the exchange system including characteristics of financial instruments traded by the exchange including their current values, previously-entered buy and sell orders for traded financial instruments, results of order matches, and the like.

The exchange 16 and/or clearinghouse 18 and/or index agent systems 19 can preferably comprise, include or be embodied in one or more processing apparatuses similar to those of the user terminals, but, more preferably, are PC computers, server computers or the like configured to communicate among themselves and with user terminal apparatuses across networks such as the Internet. These processing apparatuses preferably include database or data storage components, in particular exchange database 17 and index database 15.

Exchange database 17, which communicates with the exchange system, preferably stores information including the financial instruments traded by the exchange and buy and sell orders entered by users. Financial instruments are preferably represented in the databases by one or more records including fields for identification of the parties to the instrument (usually, the clearinghouse is a party to instruments it clears), a specified future date (an expiration data, a settlement data, or the like), a selected sports risk index (SRI) (e.g., one of the plurality preferably provided by index agent system 19), and identification of the type of instrument (e.g., providing a rule for deriving its value from the selected SRI). For example, a future or an option contract record preferably specifies a selected sports risk index according to which the instrument is valued by well-known value rules appropriate to future and option contracts.

See general, Hull, 2006, Options, Futures, and other Derivative Contracts, Pearson Education, Inc (which is incorporated herein by reference).

In preferred embodiments, the exchange database and system stores and trades a plurality of different types of derivative contracts having values derived from (also referred to herein as "being based on") a plurality of different SRIs. Each of the SRIs reflecting the economic value and risk of a different sports activity, where a sports activity concerns an individual athlete participants, a team participant, and the like in one or more different sports.

Index-determining system 19 includes index database 15 which preferably stores models by which the provided SRIs can be calculated. In preferred embodiments, SRI models are specified by a modeling method, e.g., linear regression, and the coefficients, parameters, and the like that characterize the method, e.g., coefficients of a linear regression expression. Together the specified method and parameters are sufficient for the index-determining system to automatically calculate new values of the SRI from values of the input variables that determine or explain value and/or risk of a sport activity. For example, system 19 can include a linear-regression software routine or hardware element that is configured to read specified parameters for a regression model (e.g., from data storage), to receive the input index-determining variables (e.g., from communication interfaces to data providing systems), and to calculate a regression expression providing the SRI output values from this data. Although preferred embodiments are described herein largely using statistical regression models, it should be understood that the invention is not so limited and includes other models for calculating SRIs.

The index database also preferably stores the input sports variables used to derive the SRI model, including those that describe value and/or associated risk of a sports activity and those associated explanatory variables that determine or explain such risk and/or value. It also preferably stores subsequently-received input explanatory variables to which the SRI models are applied from time-to-time to provide SRI output values.

Referring now to FIG. 2, apparatus 2 can be configured, in accordance with preferred embodiments of the present invention, to operate as one or more user terminals 12 and 14, exchange system 16, clearinghouse system 18, and index agent system 19. Although shown as separate apparatuses, in some embodiments, one or more apparatuses 2 may support one or more of the exchange system, the clearinghouse system, and the index agent system as logically separated but co-located within the a single apparatus. Further, a single user terminal apparatus can be used to enter both buy and sell orders and receive displays from the exchange system of pending buy and sell orders, current values of financial instruments, current values of the SRIs, and the like. It should be understood, however, that one or more of the entities may include alternative means for performing one or more like functions, without departing from the spirit and scope of embodiments of the present invention. As shown in FIG. 2, apparatus 1 preferably includes a processor 20 connected to a memory 22 (also referred to herein as data storage or database depending on context). The memory may comprise volatile and/or non- volatile memory. The non- volatile memory may comprise embedded and/or may be removable non-volatile memory. The memory typically stores content, data or the like. For example, the memory may store content transmitted from, and/or received by, the apparatus. Also, the memory typically stores software applications, instructions or the like for the processor to perform functions associated with operation of the apparatus in accordance with preferred embodiments of the present invention.

In many preferred embodiments, the functions and steps described herein can be implemented in software applications, routines, modules, and the like. However, it should be understood that any one or more of these functions and steps may alternatively be implemented in firmware or hardware, without departing from the spirit and scope of embodiments of the present invention. Generally, then, an apparatus according to exemplary embodiments of the present invention may include one or more logic elements for performing various functions. As will be appreciated, the logic elements may be embodied in any of a number of different manners, for example as an integrated circuit assembly including one or more integrated circuits integral or otherwise in communication.

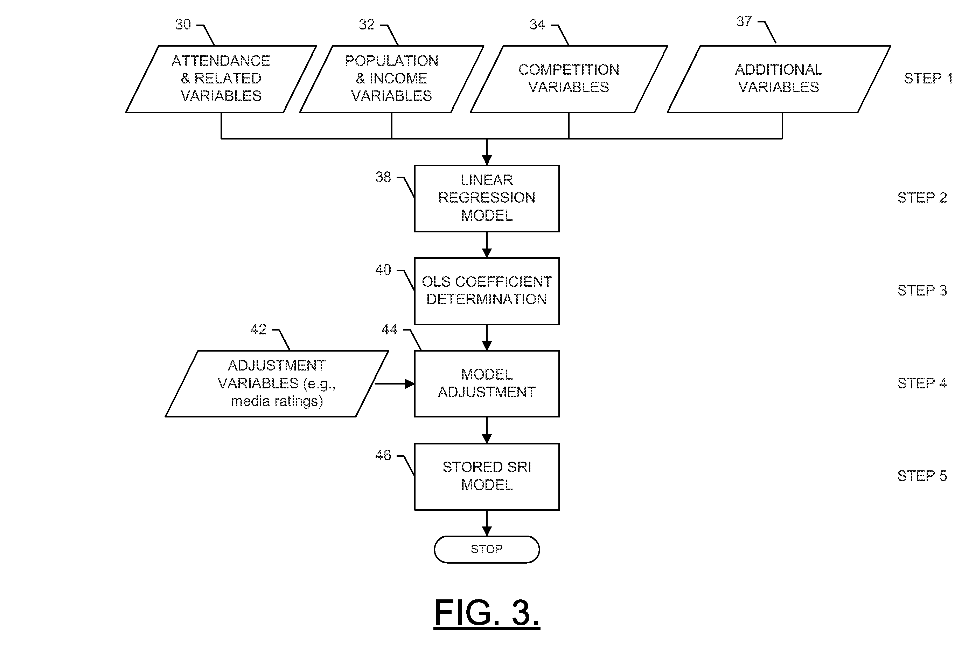

In addition to memory 22, the processor 20 may also be connected to at least one interface or other means for displaying, transmitting and/or receiving data, content or the like. In this regard, the interfaces may include at least one communication interface 24 or other means for transmitting and/or receiving data, content or the like from other computer systems, as well as at least one user interface that can include a display 26 and/or a user input device 28 for transmitting and receiving data from users. The user input interface, in turn, may comprise any of a number of devices such as a pointing device, a keypad, a touch display, or other input device. It should be understood that not all apparatuses comprise all the elements illustrated. Reference is now made to FIG. 3, which illustrates various steps in preferred methods of deriving a sports-based financial or economic value and risk index (SRI) model, in accordance with exemplary embodiments of the present invention. The methods can be implemented as already described by index agent 19 system which includes index database 18 and is in communication with external sports data 11 for receiving input data variables. In the context of the presently-described preferred embodiment based on regression modelling, the input variables are divided into variables described as regression model dependent variables (also referred to simply as "dependent variables"), which describe sports values and associated risks, and variables described as regression model independent variables (also referred to simply as "independent variables"), which are chosen to explain or determine such values and risks.

Values of the SRIs are then calculated by applying a derived model, and are communicated with exchange system 16 or clearinghouse system 18 in order that the values of traded derivative contracts (e.g., cash-settled futures contracts) based on the SRIs can be determined. As indicated above in the Summary Section, exemplary embodiments of the present invention provide SRI futures, options, and other derivative contracts that commonly (but not necessarily) are cash-settled contracts similar in design and operation to existing index derivative contracts (i.e., stock or interest rate derivative contracts). The provided derivative contracts, being based on underlying index reflecting the economic values (including associated economic risks)) of sports activities (SRI), can be used to track economic risks faced by businesses in and related to these particular sports activities. In summary, the SRI derivative contacts of this invention are preferably cash-settled options or options on futures contracts that operate similarly to other index options contracts and that may be traded on exchanges or over-the-counter.

The SRI is an index constructed of sports variables that may affect, determine, or explain the economic values of sports participants and the economic risks associated with such values. Index model derivation begins at Step 1 (FIG. 3) by selecting proper economic value and/or risk variables (the regression model dependent variables) characterizing the sports activity and then further selecting value and/or risk explanatory, or determining, or affecting variables that can explain selected economic value variables (the regression model independent variables).

As explained, the present invention applies to a wide variety of professional and amateur sports participants, e.g., individual athlete participants, team or club participants, associations of individual or team participants (leagues, conferences, committees, etc.), entire sports, and so forth. Further, the present invention applies to sports activities wherever they occur, e.g., in a particular region of a particular nation, in an entire nation, in two of more nations (either as part of a supra-national region or widely separated), or in many or all nations worldwide. Examples of individual sports activities include golf, tennis, track, and the like. Examples of national sports activities include United States major league sports, car racing (National Association for Stock Car Auto Racing), and so forth; example of regional sports activities include European soccer club competitions, and so forth; and examples of worldwide activities include international tennis, Formula 1 car racing, and so forth.

Dependent sports economic value variables can differ to some degree depending on the nature of the activity and the nation and region of the activity. Individual participants cannot have a market or sales value per se, but instead can have various revenue generating potentials (ticket receipts, advertising promotions, etc.) that can be reduced to a present value. Teams, clubs, and other associations of participants can have, in addition to similar various revenue generating potentials, a market value, such as a sales price for private associations or a market capitalization for public associations. In the United States, where major league teams are usually private organization without a public market capitalization, team sales price can be used as a dependent value variable. Independent value explanatory, or affecting, or determining variables, although also differing, perhaps to a greater degree, depending on the nature of the activity and the nation and region of the sport activity, will usually generally include basic economic variables. These include size and income characteristics of those interested in the sport activity (also referred to herein as "fans"), size of the direct attendance at the sport activities, size of indirect attendance (e.g., via media of various sorts), amount of media comment generated by the activity, availability of competing products (e.g., other baseball or soccer clubs, additional golf tournaments, and so forth). It should be understood that the invention is not limited to the variables listed herein, but that is can also include additional independent variables that will be known to those skilled in sports businesses of in businesses associated with particular sports activities in particular regions. Although independent variables (those explicitly listed and others known in the art) are preferably incorporated as part of a formal modelling process, the invention also includes supplementary independent variables (referred to herein as "adjustment variables") that are often included in an SRI model by approximate processes (e.g., manual approximation). For compactness and simplicity in view of the breadth of possible SRIs and accompanying derivative contracts, the present invention is shown and described herein in more detail in the particular context of (and with particular examples drawn from) "major league baseball" (MLB) in the United States and Canada. Although the context and examples will primarily concern MLB, it should be understood, however, that the National Football League (NFL), National Hockey League (NHL), National Basketball Association (NBA), or the like provide closely similar examples.

Thus, the components of the illustrative SRIs are reflective of the main channels through which American and Canadian MLB and professional other sports teams generate revenues and income. In this regard, fundamental market conditions and specific income-related factors are relevant in explaining the economic values and risks (e.g. long-run profit potential) of major league baseball franchises and other sports teams, and may be utilized in statistical models to provide estimates of economic value and associated risks for prospective investors, sports franchise owners, sports leagues, and other businesses facing sports-related risks.

Economic and demographic factors, including per-capita income levels and population in a team's regional area have explanatory power as a mechanism to estimate team economic value. In this regard, specific income-related factors may include revenue streams derived from gate receipts, ticket sales, and media contracts. The SRI of preferred embodiments of the present invention captures these factors through variables that are relevant to explaining current earnings (e.g., attendance through its impact on ticket revenues), and expected future earnings (e.g., media ratings through their impact on future media revenues).

The methods of one preferred embodiment of the present invention may therefore include receiving values, data or the like for a number of independent value explanatory, or determining, or affecting, variables (referred to herein as $X_j$, the j'th independent variable for the i'th sports activity or team). As shown in step 1 of FIG. 3 these variables may, for example, include attendance data 30, population and income data 32, competition data 34 (e.g., the presence or absence of a nearby competing sports team), and additional special variables 37 which may known in the art and be required in each particular case to sufficiently explain the dependent value variables.

As shown and described herein, data for the independent variables (as well as other data upon which the SRI may be based) may as appropriate represent not only current data (e.g., concurrent with the sports economic value being modelled) but also past, present or future (projection) data. In this manner, the effect of temporal trends of independent value and/or risk explanatory variables may be captured by an SRI.

One group of independent variables preferably taken into account in calculating the SRI for a particular sports activity is concerned with attendance data 30. Revenue and value depend on attendance factors through ticket sales and thus a direct contributor to the bottom line of most sports teams and franchises. For example, ticket receipts currently account for a major portion of the revenues and earnings of most MLB clubs. As such, ticket receipts may be an important value determiner or explainer, and changes in attendance patterns may have implications for the financial standing of a team.

Apart from its direct effect on the revenues of MLB franchises, attendance also has revenue implications for other businesses. For advertisers and sponsors, for example, the number of people in stadium attendance who will be exposed to a company's banners and other promotional materials may be a proxy measurement of how much value that organization captures from its advertising (sponsorship) contract. Attendance is also a determiner or explainer of stadium and stadium-related revenues. All other things being equal, higher attendance means higher revenues from stadium-related concession, parking and merchandise sales. And for independent businesses that locate near a stadium, for example, the number of people in stadium attendance may be directly tied to their success; faltering attendance may mean losses in foot traffic and in the success of such enterprises.

Attendance data 30 may be based on any of a number of different attendance figures, but in one exemplary embodiment, is based on a team's total home game attendance for the regular season. Attendance data may be collected from any of a number of different sources such as from any one or more of a number of publicly-available databases and publications. In the context of MLB, for example, one source of attendance data may be Major League Baseball's official website. Attendance risk can be measured by a standard deviation (or similar attendance statistic), and if available, can be included in the attendance-type variables.

Another group of independent variables preferably taken into account in calculating the SRI is population and income data 32, which may be reflected by Metropolitan Statistical Area (MSA) level population data in the area including a team. In this regard, demographic factors such as the population of the MSA of each respective MLB franchise vary on a location-by-location basis. The existing population has implications on potential future cash flows that a team can generate, such as may be the result of the potential effect on the size of the team's fan base and the ability of that fan base to support luxury seating, as well as the potential effect on the size of the team's local broadcast media (e.g., television) contract, local sponsorship and advertising.

Similar to attendance data 30, population data 32 may be collected from any of a number of different sources. In the United States, the Department of Commerce, Bureau of Economic Analysis (BEA) typically compiles this data on a regular (e.g., annual) basis. Population data received for calculation of the SRI may be based on each respective MLB team's MSA for the calendar year of the calculation.

As suggested above relative to an MSA population having the ability to support luxury seating, the wealth of the population in the team's MSA may also have revenue implications. In this regard, population and wealth may be proxies for the demand demographics that each team faces in its locality. Thus population data is preferably considered herein to include parameters of relevant wealth or income. Such data may be reflected in a number of different manners, but in one exemplary embodiment, may be reflected by the per-capita income of the population in the team's MSA. Also, income data may be collected from a number of different sources such as the BEA, which may also compile this data on a regular basis. Similar to population data, income data received for calculation of the SRI may be based on each respective MLB team's MSA for the calendar year of the index being calculated, and may be reflected in current value (not adjusted for inflation). Further changes in population and income data can be significantly determinative, affecting, at least, risk. A sports team in a region with stagnant or declining population and income can be expected to have a more uncertain future than one in a region where the measures are improving. Such changes are commonly available at least by comparing data from recent collection periods. Another group of preferred independent variable are concerned with the presence or absence of competition, either direct or indirect. All other things equal, a team in an area with no other professional teams may be able to command a premium value compared to a team from an area with several potentially-competitive professional sports teams, for example, teams in different leagues of the same sport or in even teams in different sports altogether. Even more important may be the effect of the presence of a second team in the same major league. Two teams in the same sport may directly compete against each other for attendance, broadcast media audience and sponsorship dollars. Thus, the value explanatory variables preferably further include competition variables 34. In a simple form, an exemplary competition variable 34 can be a "second team" dummy variable reflecting the presence or absence of an additional team in a respective team's MSA. For example, a 0-value indicates that there is one team in the MSA; whereas a 1-value indicates that more than one team exists in the MSA.

Finally, in particular sports activities, additional variables 37 may be important to explaining or determining economic value and are preferably incorporated into an SRI. As discussed, the already-described variables are exemplary for U.S. major league sports teams, especially for MLB teams, and may not be as useful in the case of other sports activities. For other sports activities, additional descriptive and explanatory variables may advantageously add to or replace these already-described variables.

Further, for any sports activity, additional descriptive and explanatory variables may be well known to those familiar with the activity but may not be captured (or able to be captured) by common economic analysis. For example, in the case of sports teams or clubs, such additional variables may reflect characteristics of a particular member, e.g., "star" character, reputation, notoriety, and so forth. For another example, one of these additional variables may be based on all-star voting for one or more players of a particular team (e.g., the total number of all-star votes accumulated by a team through the players on its roster). In this regard, all-star voting may be a direct indicator of how much public interest there is towards a particular team, and may also provide a measure of the quality of personnel and management decisions that lead to increased interest in the team and its products, thereby capturing an additional dimension pertaining to the ability of a team to enhance its appeal to the public and to generate more economic value.

Next, derivation of an SRI model then proceeds to Step 2 where the selected model dependent and independent variables are used to construct a model which can be automatically applied to compute an SRI from new values of the independent value and/or risk determining or explaining variables. In an optional preliminary step, an index is constructed to represent the dependent value variables. If a single economic value variable has been chosen, such a single variable alone can be considered to be the SRI. If two or more dependent economic value variables have been chosen, the SRI can be constructed from a combination of these variables, perhaps by averaging, weighting, or as otherwise known in the art. Finally, the SRI can be normalized to be within a preselected range, or by comparison with baseline values, or the like.

The SRI model is then derived from the values of the economic value and/or risk variables (or index or combinations of the same) and of concurrent independent determining or explaining variables according to known modelling techniques, for example, according to statistical modelling techniques known in econometrics. In preferred embodiments, regression techniques, particularly linear regression techniques known from statistical inference are employed for SRI model building.

In such preferred embodiments, the general linear regression model for the i'th sports activity or team (a single value variable or a combination thereof) can preferably be expressed as follows:

$$\ddot{Y}^i = b_0^i + \sum_{j=1}^{N} b_j^i X_j^i$$

In this regression equation, $\ddot{Y}^1$ stands for a derived or explained size of a dependent economic value variables (e.g., a club sales price), or an index thereof (e.g., combination of a plurality of such dependent economic value variables), of the sports activity or team; $X_j$ is the j'th independent determining or explanatory variable for this sports activity or team (j runs from 1 to a maximum of N which may vary with the sports activity or team); and bj is the j'th regression parameter for this sports activity or team (here, j runs from 0 to N).

As noted briefly above, although the values of the independent variables, $X_j$, are generally determined at a time concurrent with the time of determination of the (measured) values of dependent variables, $Y^1$, the $X_j$ do not necessary refer only to current time (e.g., possibly referring to 6 mons. or 1 yr. earlier than the current time). In some preferred embodiments, it can be advantageous for the index model to capture influences of the past, or equivalently, changes of variables. For example, given a current level of attendance, rapid recent declines in attendance to the current level may cause a greater decrease in the economic value than a gradual decrease to the current level. In such embodiments, each Xj can comprise a plurality of values referring to current time and to several previous times (but available at the current time), or can be an average of weighted average of current and past values, or it can be a current value and its current rate of change. Such information can also be incorporated by statistical measures of the time series of a variables, e.g., its standard deviation. Next, in step 3 (FIG. 3), the N+I regression parameters bj are determined by one of the methods known in the statistical arts, preferably by ordinary least squares (OLS) techniques. Thus, preferred SRI model 40 is referred to herein (but without limitation) as an OLS model. See, generally, Wasserman, 2004, All of Statistics, Springer Science+Business Media, LLC (which is incorporated herein by reference). Briefly, least squares techniques determine regression parameters by minimizing the square of the difference between derived values of the dependent value variables, or combinations thereof, $\ddot{Y}^1$, and the observed or measured value, $Y^1$, of that same dependent variable or combination. The dependent value variables in the model may represent transaction (e.g., sale) values of MLB franchises to third parties. More particularly, $Y^1$ may reflect transaction values (sale prices), while $\ddot{Y}^1$ may reflect the derived values produced by the regression expression.

Thus, the bj are determined as solutions of the following equation.

$$Tn\ln(Y^1 - \ddot{Y}^1)^2 = rain\ bjXj \left( Y^i - b_0^i - \sum_{j=1}^{N} \right.$$

Stated differently, the bj are determined by regressing the Y-variable against X-variables. Preferably, the bj are determined uniquely, which then requires a number (e.g., N+I) of data, in this case N+I pairs of concurrent values of the dependent $\ddot{Y}^1$ and the corresponding pluralities of the independent Xj. In certain preferred embodiments, each pair of such a set refers to the same sports activity or team; in other embodiments, pairs of this set can refer to two or more different but preferably closely similar sports activity or teams. Closely similar sports activities or teams are considered to refer to those activities (preferably non-competing) that have similar economic value behaviour, for example, by being activities in the same league, or activities in the same sport, or so forth.

Although a complete SRI model can result from the parameter estimates returned by such OLS techniques, in certain circumstances, it is preferably that the OLS model be supplemented or adjusted based on one or more adjustment variables capturing additional, factors that may be relevant in explaining the economic value and/or risk of sports activities (e.g., individual and team participants). Such adjustment variables for one reason or another are preferably not handled by general regression and OLS techniques, but are preferably handled uniquely, possibly in a manual manner. For example, such a variable, although known to be useful for value and/or risk determination or explanation, may not have available sufficient data, or sufficiently continuous data, or sufficiently quantitative data to be input into the general OLS technique.

For example, although all-star voting for one or more players of a particular team (e.g., the total number of all-star votes accumulated by a team through the players on its roster) was described above as incorporated into formal model derivation as additional data 37, in certain cases such all-star voting data may, e.g., be only irregularly available, and when available, different voting instances may not be comparable. Then, this data may be more advantageously incorporated into an SRI model as adjustment data 42.

Another data type that can be incorporated either as additional data 37 or as adjustment data 42 is team-by-team media (e.g., television, radio, Internet streaming, etc.) ratings. Such data is of increasing importance, and in fact, may be a significant factor due to the increased role of media in the business of sports. The media ratings of a program (or, for example, the "hits" at a web site) may determine how much the media company (or web site) can charge advertisers for commercial presence; hence the relevance of media ratings in how much the media company is willing to pay for the rights of a team or a league. The revenues generated from the sale of media rights both on a national and a local level may be important to the finances of sports teams and that is one reason why a team's media contracts may impact its value. Media ratings data may be collected from any of a number of different sources. Television ratings data, for example, may be collected from a source such as Nielsen Media Research, and may represent projected ratings from local telecasts of home and away games in the designated market area defined by its source. And in a more particular example, television ratings data may be expressed in terms of the estimated number of households that tuned in to watch a local telecast of their respective team.

For example, if television ratings data were available and were of such a type (e.g., due to its coverage limitations) that it would be more advantageously incorporated as adjustment data, an estimate of bj for such data can be assumed so that the rating data accounts for, on average, a particular percentage (e.g., 10-20%) of the relative values/risks of the sports teams. This percentage may be derived in a number of different manners, such as empirical estimates or the like. Alternatively, if data describing media ratings were of sufficient, coverage, and so forth for it to be incorporated as additional data 37, bj for such data could be determined during the previously described OLS process.

Adjustment variables can also be used to capture the effects of intangibles (i.e., customer tastes and preferences concerning a sport, a sports team, or a sports participant) and can have values derived from survey data, polling data, and the like. In such instances, the model adjustment 44 may be applied to account for the additional variables by, e.g., assuming estimates for the bj for the respective adjustment variables.

Following such adjustment, if any, of the model, an exemplary SRI model or algorithm 46 for calculating the SRI for the i'th team or sports activity derived from the general OLS model can be expressed qualitatively as follows:

$$\text{SRf} = b'_0 + b'_i \text{ (Attendance \& related variables)} + b^1_2 \text{(Population \& income)} + b^*_3$$

$$\text{(Competition variables)} + b\backslash \text{ (Media ratings variables)} + b's \text{ (Additional variables)} + b'\beta \text{ (Adjustment}$$

$$\text{variables) (1)}$$

Finally, in step 5 of FIG. 3, SRI model 46 is stored in data storage for later retrieval and use in calculating SRI values from subsequently received independent variables (i.e., value and/or associated risk determining or explanatory variables). Such models can be represented in a data store or database by a data records. An exemplary such data record can include (but not be limited to) fields for the value N of the number of independent variables, for identification of each of the N value determining independent variables, $X_j$, and of their preferred data sources, and for values of the regression parameters, bj. Such a model can later be applied by retrieving its representation from storage, obtaining subsequent values for the value determining variables as specified by their identification and preferred sources, and forming the weighted sum indicated by the above linear regression equation.

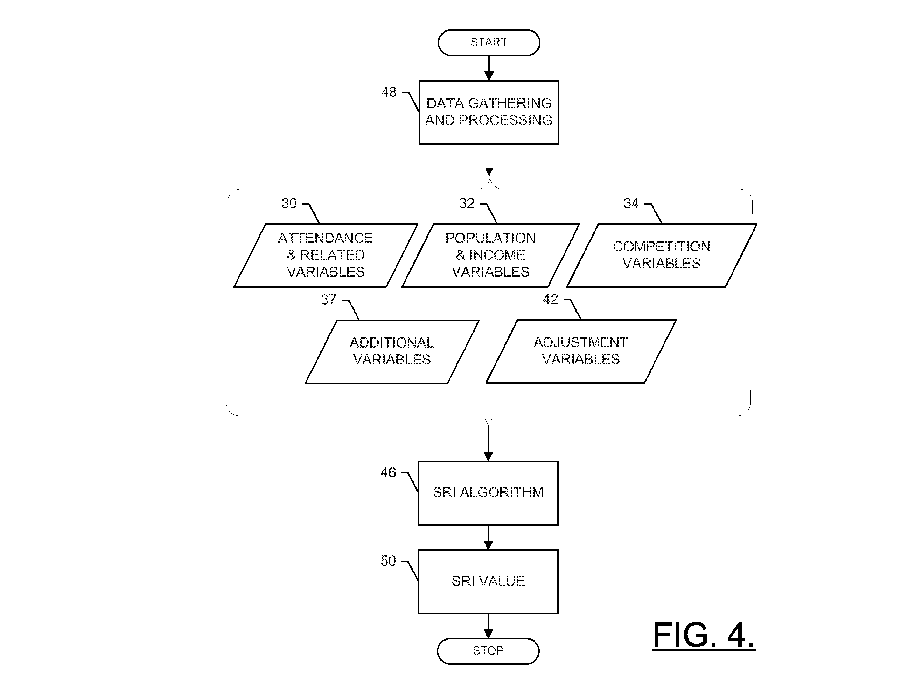

Referring now to FIG. 4, a preferred method for calculating an SRI value for a sports activity such as a sports club or team includes, as shown at block 48, gathering and processing data for the independent determining variables that capture factors relevant in explaining the economic values (e.g., a long-run profit potential) and associated risks of the club or team. As explained above, such value explanatory or determining variables can include attendance and related variables 30, population and income variables 32, variables capturing the competitive context of the club or team 34, and/or data for one or more additional variables 37, and less formal adjustment variables 42. As or after the data is collected, the data is made available to a computing device which performs SRI model 46 - e.g., linear regression (1) - to calculate SRI value 50 for the sports activity, teams, club, or the like.

Data for the variables may be sourced or processed in any of a number of different manners, as appropriate. For example, attendance data 30 and media ratings data (particular, broadcast media ratings data) could be aggregated to a total for the most recent 365 days (as is in United States baseball leagues). In such an instance, the media ratings data applied to the coefficients from the above equation (1) can be transformed to a 365, daily-moving total. Such data processing details commonly varies on a sport-by-sport basis.

The SRI model is applied to the independent value and/or risk determining variable data by performing the routine calculation indicated by equation (1). In certain cases, values for one or more of the independent variables may not be available for a particular SRI calculation. In such cases, default values may be used, an exemplary default value being a recent previous value (or a recent previous value corrected anticipated current changes).

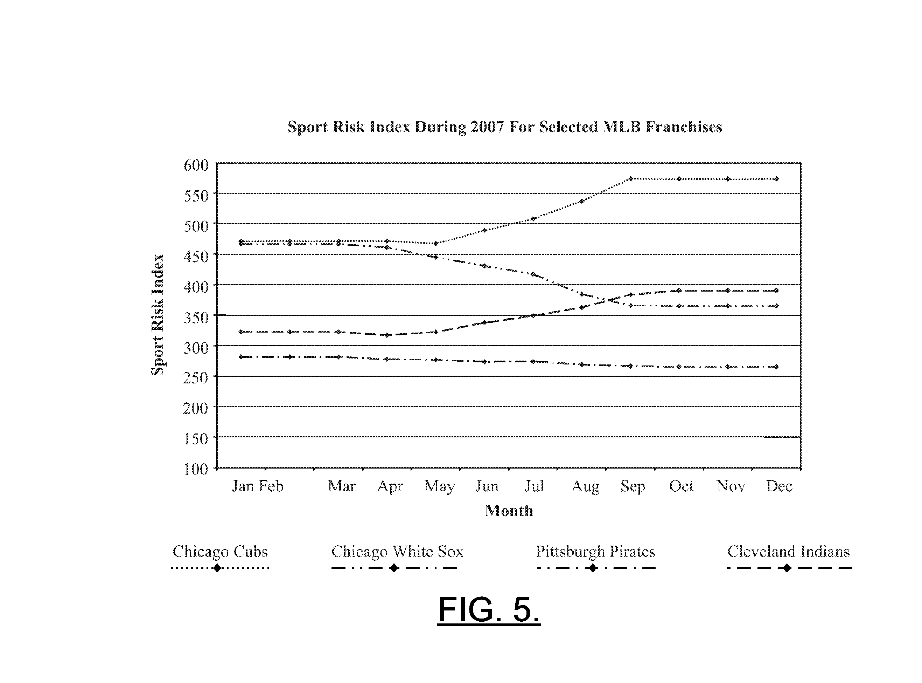

The calculated SRI value 50 for a particular sports activity (e.g. a sports team) may then be used to underlie associated SRI derivative contracts (e.g., futures contracts), which can be tradable by the system of FIG. 1. In addition to an index calculated for each team or franchise, individual team indices may be aggregated into a value or risk weighted index for an entire league (e.g., the leagues of United States MLB). Such a league index could be used for a number of purposes, such as to manage an organization's risk exposure to a potential decrease in the popularity and revenue generating capacity of the league. Further, the SRI values calculated for teams in a given sport can be aggregated into an index for the entire sport (SRIs for baseball, basketball, football, and so forth), which can be similarly used. SRI values are preferably calculated multiple times, such as on a periodic basis; and may be tracked over time, such as in the manner shown in FIG. 5 for four MLB franchises. More particularly, for example, the SRI may be re-calculated daily using the most recent available data, although some of the data (e.g., attendance and broadcast media ratings) may be included on a rolling time basis (e.g., rolling 12-month aggregate values). The data included on a rolling time basis may be able to detect and incorporate new developments related to the revenue generating power of a franchise, while at the same time providing continuity and convergence. Updated television ratings data compiled by Nielsen Media Research, for example, may be available for inclusion in a daily SRI recalculation on either an overnight or on a T+2 (two days after a game is played) basis. The course and trends of periodically calculated SRIs have use for trading of derivative contracts based on the indices.

An illustration of the range of SRI values that can be produced by the models of this invention, the following list presents SRI for the 29 U. S. -based MLB teams as of the end of 2007.

Sports Risk Index For MLB Franchises As Of December 31, 2007

1 New York Yankees 1158.60
2 New York Mets 965.13
3 Boston Red Sox 919.28
4 Philadelphia Phillies 701.32
5 Chicago Cubs 631.86
6 Los Angeles Dodgers 614.87
7 Seattle Mariners 599.86
8 Detroit Tigers 572.66
9 Houston Astros 550.87
10 Los Angeles Angels of Anaheim 545.28
11 St. Louis Cardinals 537.45
12 Minnesota Twins 521.37
13 San Francisco Giants 506.74
14 San Diego Padres 478.41
15 Atlanta Braves 461.69
16 Washington Nationals 459.96
17 Colorado Rockies 447.62
18 Arizona Diamondbacks 447.42
19 Cleveland Indians 442.04
20 Texas Rangers 428.25
21 Milwaukee Brewers 419.07
22 Chicago White Sox 404.73
23 Baltimore Orioles 394.60
24 Oakland Athletics 371.02
25 Florida Marlins 369.56
26 Cincinnati Reds 322.36
27 Pittsburgh Pirates 301.23
28 Tampa Bay Rays 268.21
29 Kansas City Royals 263.23

EXAMPLES

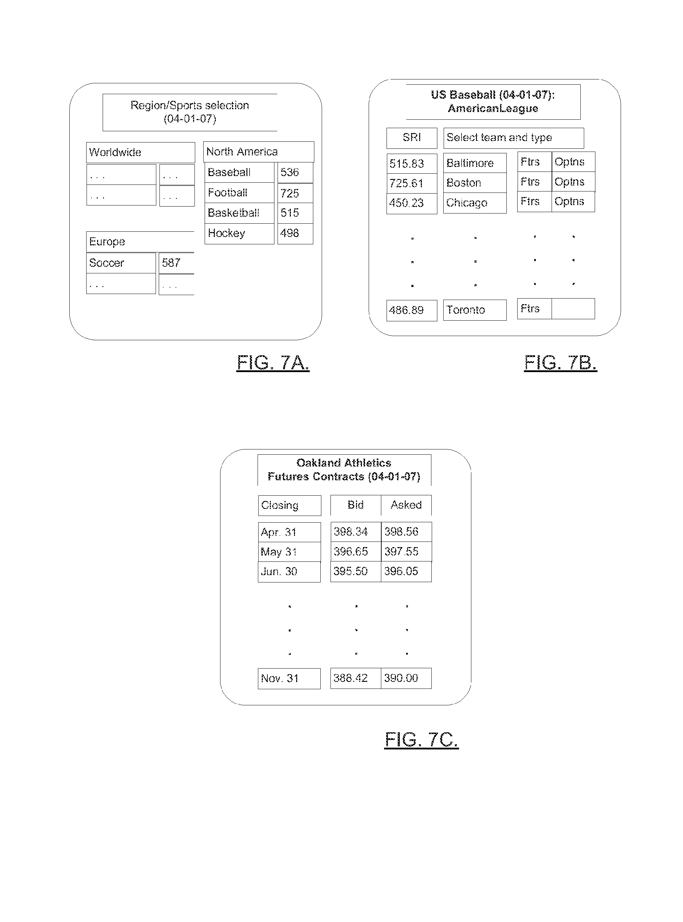

The following presents a first example of an exemplary interactive order process that is illustrated by FIGS. 7A-F. Following that are examples of the calculation of an SRI value for a particular sports activity, the use of futures contracts by a sports-associated business to manage risk, and the behavior of a season-term future contract.

EXAMPLE 1 - AN EXEMPLARY INTERACTIVE ORDER ENTRY PROCESS OF THIS INVENTION

FIGS. 7A-F illustrate display screens that exemplify a possible order process according to the present invention. These screens can be displayed, for example, at user terminals 12 and 14 by exchange system 18 in cooperation with index agent system 19 (for calculating SRI values). A user can interact with these screens in known manners, e.g., by selecting text and icons, by entering text into fields, and the like. Specifically, these exemplary screens illustrate a user's search for, and order of, a particular futures contract provided by exchange system 18; the illustrated search proceeds through a structured and hierarchical arrangement of successive display screens.

In detail, FIG. 7A illustrates a screen displayed by the trading /exchange system summarizing at a high level the derivative contracts stored in database 17 and available for trading. The display is organized by regions, both worldwide and local, and by the region's sports activities on which available derivative contracts are based. A user can select a region and a particular sports activity within a region (by selecting the illustrated text boxes) for detailed display. For North American sports activities, a cumulative SRI is illustrated that characterizes the economic values of all sports activities of the particular type (e.g., baseball, football, etc.).

Next, FIG. 7B illustrates a screen that could be displayed if a user selected from the screen of FIG 7A North American (US and Canada) major league baseball (in particular, teams in the American League). This screen displays the particular teams or clubs in the selected league, their current SRIs, and whether or not futures (Ftrs) or option (Optns) contracts are currently (as of 04-01-07) available. For example, futures and option contracts are available at least for the Baltimore, Boston, and Chicago baseball teams; however, for the Toronto baseball team, only futures but no option contracts are available. The user can select the Ftrs or the Optns boxes for a particular team in order to call up a detail display of the selected contracts for the selected team. In FIGS. 7B-F, screen field or fields in bold in a further figure make clear what was selected in the screen of the previous figure in order to call up the screen of the further figure (e.g., the US American League was selected in the screen of FIG. 7A to call up the screen of FIG. 7B).

Next, FIG. 7C illustrates the screen displayed if a user selected futures contracts (Ftrs) for the Oakland baseball team (a team in the American League but not illustrated in FIG. 7B) from the screen of FIG 7B. This screen displays currently available futures contracts, their closing (expiration) dates, their current bid prices, and their current asked prices. (Contracts are presumed to be cash settled in an amount equal to an SRI value specified by the contact times a notional multiplier (e.g., 10)). The user can select the text box with the contract closing of interest in order to proceed to order entry.

In this exemplary embodiment, exchange system provides two paths through order entry: a shorter path that directly brings up the order-entry screen, and a longer path that brings up an order-book screen prior to the order-entry screen. The direct path is more suitable for users (non-traders) who wish to perform a transaction at market prices, while the longer path can be advantageous for users (traders) who wish to perform a transaction selected in view of market conditions.

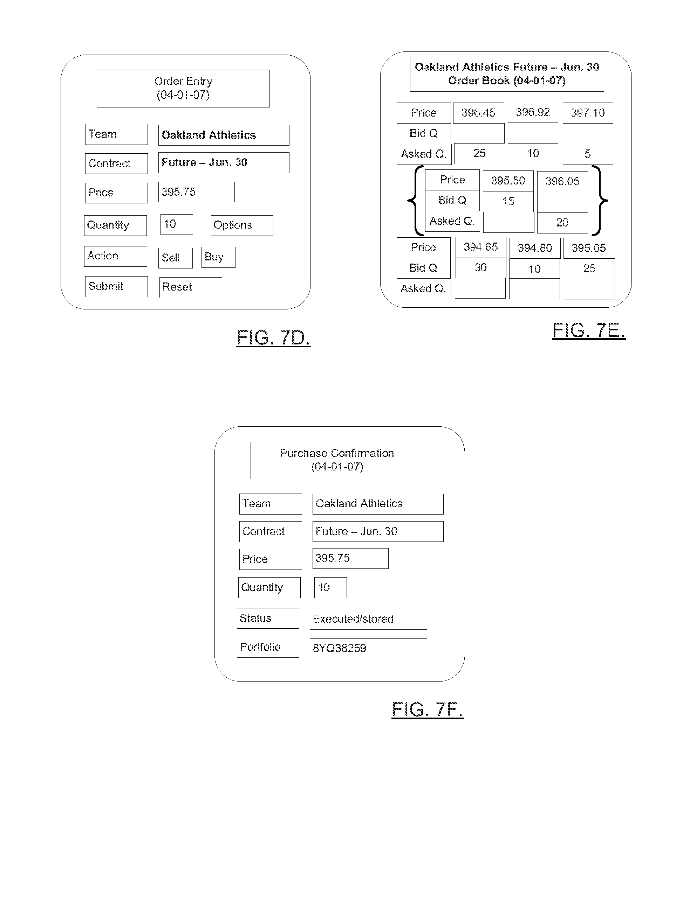

Consider first the direct path leading immediately to order entry screen FIG. 7D. This screen is displayed if the user selects in FIG. 7C a transaction for futures contract for the Oakland team expiring on June 30, 2007.

The illustrated order-entry screen provides fields to identify the derivative contract that is the subject of the order, e.g., the team, the type of contract, and its closing date. This screen also display a price field, a quantity field for the number of contracts to buy or sell, and an options field of fields for additional order options (if any). For a "market-price" user, the price field can signify, e.g., the only price acceptable to the user, a maximum price acceptable to the user, an approximate price acceptable to the user, and so forth. Finally, this screen also displays buttons to identify the order as buy or sell, and to submit the order or to reset the screen. The user enters an order by entering a contract types, a price, and a quantity and then by selecting (optionally) option buttons, an action button, and a submit/reset button.

If the user wishes to review market conditions prior to order entry, the exchange system can display the order-book screen illustrated in FIG. 7E. This screen displays, at least, the current pending order book for the selected contracts, that is the open and unmatched buy (bid) and sell (ask) orders stored in database 17. There are three bands of stored order information, each band having three rows: a row presenting prices of stored orders, a row presenting bid quantities (Bid Q.) at that price, and a row presenting ask quantities (Ask Q.) at that price. The middle band, set off by braces, presents the current "inside market" region (the closest bid and ask orders); the top band presents ask orders at prices higher that the inside market prices; and the bottom band presents bid orders at prices lower that the inside market prices. A trader can determine a desired order strategy from information on such an order-book screen, and can then proceed to the order-entry screen of FIG. 7D to carry out the strategy.

Finally, FIG. 7F illustrates an order-confirmation screen displayed in to response to submission of order-entry screen of FIG. 7D. This screen re-displays the team, contract type, price, and quantity information of the previously entered order. This screen also displays the status of the entered order, either that that the order was matched with a corresponding order and executed, or that the order was not matched but was simply stored by the exchange system (e.g., in the order book). In case the order was executed, the specified number of contracts will be transferred to the new party and assigned to the particular portfolio of this new party identified by the portfolio field by update of the contract records in the exchange database. The order book will also be updated by update of the order records in the exchange database. In case the order was simply stored, upon subsequent match a subsequent order confirmation screen indicating the updated status could be generated.

EXAMPLE 2 - CALCULATION OF AN SRI VALUE FROM AN SRI MODEL OF THIS INVENTION

This example further illustrates the method of calculating an SRI for a United States baseball team, the Boston Red Sox for December 31, 2006, according to preferred embodiments of the present invention. The Boston Red Sox team is located in Boston - a city in the Boston-Cambridge-Quincy MSA (metropolitan statistical area). Correspondingly, the appropriate data gathered from the Bureau of Economic Analysis (a preferred data source) can include, in calendar year 2006, an MSA population of 4,465,674 and an MSA per-capita income of $50,542 (i.e., population and income data 32). Attendance data for all home games over the last 365-days (one year) may be aggregated to 2,930,768 people that attended Boston Red Sox's home games in the period January 1, 2006 - December 31, 2006 (i.e., attendance data 30). Projected television ratings data on all local telecasts may also be aggregated over the last 365-days to 36,984,000 households that watched the local telecasts of the team's games in the period January 1 , 2006 - December 31 , 2006. Since there is no second MLB team in the same MSA as the Red Sox, competition variable 34 can be set to zero. The collected value explanatory or determining data for the Boston Red Sox for

December 31, 2006 can be summarized follows: Home Attendance: 2,930,768 MSA Population: 4,465,674 MSA Per Capita Income: $50,542 Second Team: 0 (No other team in MLB from Boston's MSA)

Local TV Projections: 36,984,000

The input data may then be entered into the SRI algorithm - e.g., equation (1) -whereby each variable is multiplied by its respective regression coefficient. These regression coefficients have been previously determined by the described OLS methods as applied to all MLB teams. Exemplary values are: $b_0$ = -211.787; $b_i$ = 0.0000662; $b_2$ = 0.0000149; $b_3$ = 0.0079664; $b_4$ = -141.889; and $b_5$ = 0.00001. Equation (1) then yields an SRI value for the Red Sox of 821.28.

In another example, a similar calculation using the values of the same independent determining variables for the Arizona Diamondbacks MLB team for April 1, 2007 yields an SRI value of 389.44.

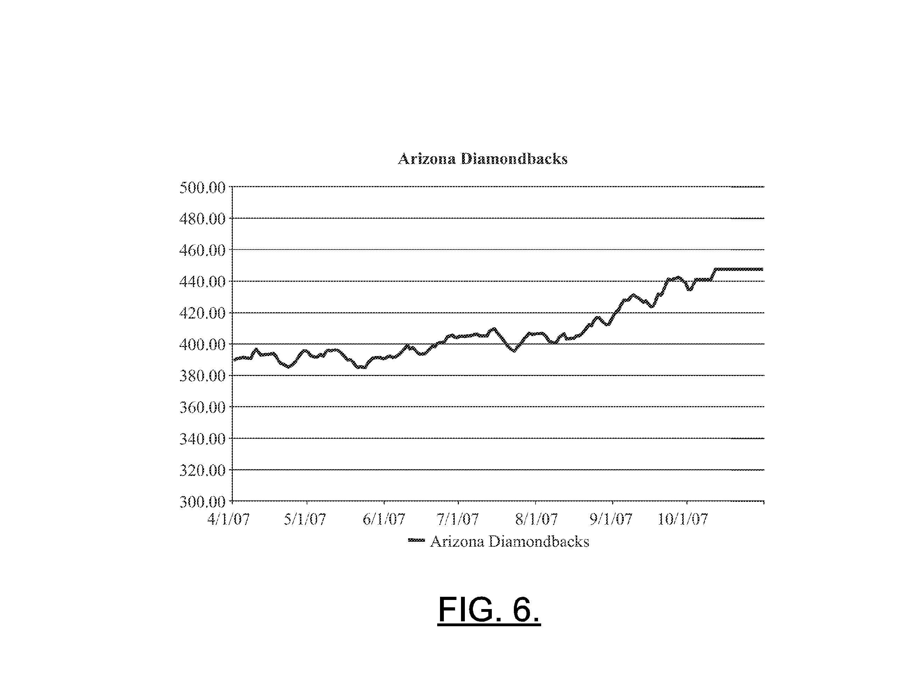

As indicated above, application of the algorithm is repeatable and may be used to generate a discrete series of daily or other periodic values that reflect changes in relative franchise value for the Red Sox or Diamondbacks (see FIG. 6), or more generally for a particular sports team.

EXAMPLE 3 - RISK MANAGEMENT USING A FUTURES CONTRACT OF THIS INVENTION

This example illustrates how a sports-associated enterprise, in this case, a provider of goods and services at a stadium of a sports team (the "concessionaire"), having a commercial activity varying at least in part along with the success of the team occupying the stadium, in this case the Arizona Diamondbacks (a U.S. baseball team), can hedge or offset risk by use of financial instruments of this invention that are based on the SRI for the Diamondbacks (the "Arizona SRI"). The following table presents exemplary values for the SRI for May, 2007.

| Date | Team | SRI |
|---|---|---|
| 05/01/07 | Arizona Diamondbacks | 394.82 |
| 05/31/07 | Arizona Diamondbacks | 390.56 |

In this example, the concessionaire assumes a short position on one futures contract on the Arizona SRI. The motivation is that, in the event that home attendance is down during May, 2007 resulting in a decrease in food and beverage sales, lost concession revenues might be recouped, at least in part, through the return of a profit on the shorted futures contract. The future contracts are assumed to have an exemplary notional multiplier of 1OX and the enterprise is assumed to have access to a margin account with an exemplary initial margin deposit requirement of $400.

Suppose that on May 1, 2007, the concessionaire at the Arizona Diamondbacks baseball stadium decides to go short on one Arizona SRI one-month futures contract at 394.82. Thus, as of May 1, the account's cash Position is $3,948.20 (394.82 x 10) and the margin deposit requirement is $400.00. Then on May 31, 2007, assume that the Arizona SRI value has dropped to 390.56 (resulting in a gain to the concessionaire and a loss to traders of this futures contract holding a "long" position). The gain on the concessionaire's account from May 1 to May 31 is 42.60, where 10 x (394.82 - 390.56) = 10 x 4.26 = $42.60. A variation margin of $42.60 is credited to the account, and the value of margin account becomes $442.60.

The result of these two transactions is summarized in the following table.

| Date | Variation Margins |
|---|---|
| 05/01/07 | $0.00 |
| 05/31/07 | $42.60 |

The one month return on the investment (ROI) equals 10.65% ($42.60/$400.00). If the concessionaire had purchased multiple Arizona SRI futures contracts at an Arizona SRI value of 394.82 on May 1, then the total 1-month gain at the end of May is set out in the following table.

| Number of Arizona SRI Futures Contracts Purchased | Margin Deposit Requirement | Total 1 Month Gain (before trading fees) |
|---|---|---|
| 10 | $4,000.00 | $426.00 |
| 100 | $40,000.00 | $4,260.00 |
| 1000 | $400,000.00 | $42,600.00 |

Depending on the actual decline on home attendance and the relation of the concessionaire's commercial results to home attendance, these transactions can partly or completely offset decline in the concessionaire's business revenue. Accordingly, the present invention has facilitated the concessionaire to manage business risk.

EXAMPLE 4 - BEHAVIOR OF A SEASON FUTURES CONTRACT OF THIS INVENTION

This example illustrates how a trader not necessarily having a business enterprise associated with the Arizona Diamondbacks can facilitate and profit from trading in the financial instruments provided by the present invention. The subject trader believes that the 2008 season will be favorable for the Diamondbacks, and accordingly on April 1 decides to buy long one Arizona SRI futures contract at 389.44 which expires at the end of the MLB season (November "delivery"). As in the previous example, the contract is assumed to have a notional multiplier of 10X, and the trader is assumed to have access to an account with an initial margin deposit requirement of $400.

The following table presents exemplary Arizona SRI values for the 2008 season.

| Date | Team | SRI |
|---|---|---|
| 04/01/08 | Arizona Diamondbacks | 389.44 |
| 04/30/08 | Arizona Diamondbacks | 395.64 |
| 05/31/08 | Arizona Diamondbacks | 390.56 |
| 06/30/08 | Arizona Diamondbacks | 404.06 |
| 07/31/08 | Arizona Diamondbacks | 406.14 |
| 08/31/08 | Arizona Diamondbacks | 415.38 |
| 09/30/08 | Arizona Diamondbacks | 438.83 |
| 11/01/08 | Arizona Diamondbacks | 447.42 |

Although May was a less advantageous month, the trader correctly anticipated the overall advantageous trend of the season results of this team.

The following table presents the variation margin in the trader's margin account. If the variation margin is negative, it represent liquidity provided to the market and a loss to the trader; if positive, liquidity is removed from the market to the benefit of the trader.

| Date | Variation Margins |
|---|---|
| 04/01/08 | $0.00 |

(continued)

| Date | Variation Margins |
| --- | --- |
| 04/30/08 | $62.00 |
| 05/31/08 | ($50.80) |
| 06/30/08 | $135.00 |
| 07/31/08 | $20.80 |
| 08/31/08 | $92.40 |
| 09/30/08 | $234.50 |
| 11/01/08 | $85.90 |

Here, the negative variation margin for May could have been to the advantage of the concessionaire of Example 3.

The gain or the loss on the future contract held to expiration is the sum of the variation margins, which is $579.80; the 7-Month ROI is 145% ($579.80/$400.00). If the trader had purchased multiple Arizona SRI futures contracts at an Arizona SRI value of $389.44 on 04/01/08, the trader's total 7-month gain would be as in the following table.

| Number of Arizona SRI Futures Contracts Purchased | Margin Deposit Requirement | Total 7 Month Gain (before trading fees) |
| --- | --- | --- |
| 10 | $4,000.00 | $5,798.00 |
| 100 | $40,000.00 | $57,980.00 |
| 1000 | $400,000.00 | $579,800.00 |

It is intended and should be understood that the description of the invention with reference to the preferred embodiment illustrated in FIGS. 1-7 is not to be taken as limiting. Accordingly, the invention can also be performed by further means, such as hardware and/or firmware alone and/or under control of a computer program product. A computer program product for performing one or more functions of exemplary embodiments of the present invention includes a computer-readable storage medium, such as the non-volatile storage medium, and software including computer-readable program code portions, such as a series of computer instructions, embodied in the computer-readable storage medium. Further, each block or step of the illustrated flowcharts, and combinations of blocks in the flowcharts, may be implemented by various means, such as hardware, firmware, and/or software including one or more computer program instructions. As will be appreciated, any such computer program instructions may be loaded onto a computer or other programmable apparatus to produce a machine, such that the instructions which execute on the computer or other programmable apparatus (e.g., hardware) create means for implementing the functions specified in the block(s) or step(s) of the flowcharts.

Further, these computer program instructions may also be stored in a computer-readable memory that may direct a computer or other programmable apparatus to function in a particular manner, such that the instructions stored in the computer-readable memory produce an article of manufacture including instruction means which implement the function specified in the block(s) or step(s) of the flowcharts. The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the block(s) or step(s) of the flowcharts.

Further, accordingly, blocks or steps of the flowcharts support combinations of means for performing the specified functions, combinations of steps for performing the specified functions and program instruction means for performing the specified functions. It will also be understood that one or more blocks or steps of the flowcharts, and combinations of blocks or steps in the flowcharts, may be implemented by special purpose hardware-based computer systems which perform the specified functions or steps, or combinations of special purpose hardware and computer instructions.

Further, many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. An index-determining system for facilitating management of sports-associated economic risk by determining an index reflecting economic values and/or associated risks of a sports activity, said system being less susceptible to manipulation by utilising underlying variables that are independently influenced by a number of factors and which are derived from independent sources, the system comprising:

   one or more processing components, one or more data-storage components, and one or more communication interfaces,
   the processor, data-storage, and communication interface components being configured for receiving information comprising one or more sports variables describing economic values and/or associated risks of a sports activity and a plurality of further sports variables determining or explaining such values or risks of the sports activity,
   the system being adapted, in use, to derive from the received information a sports risk index (SRI) model for the sports activity,
   the derived model being configured for computing an SRI reflecting economic values and/or associated risks of the sports activity from subsequently-received variables determining or explaining such values or risks of the sports activity,
   receiving subsequently from time-to-time the determining or predicting variables, and computing subsequent values of the SRI by applying the derived SRI model to the subsequently-received variables determining or explaining such values or risks of the sports activity, **characterised by**:

   the computed SRI values reflecting the sports variables describing economic values and/or associated risks of a sports activity expected to be associated with the subsequently-received value or risk determinative or explanatory variables, and wherein
   the explanatory variables underlying the SRI comprise any one or more of the group comprising: economic and demographic information; attendance; TV viewing ratings; financial or cost related information, and factors related to revenue generation by the sports industry including public preferences and tastes; economic and demographic information.

2. The system of claim 1 wherein applying the derived SRI model comprises: computing sports value and/or risk variables expected to be associated with subsequently-received determinative or explanatory variables; and determining the index in dependence on the computed sports value and/or risk variables.

3. The system of claim 1 or claim 2, wherein the SRI model is constructed at least in part by statistical methods so as to relate in a selected statistically-optimum manner the received economic values and/or associated risks of the sports activity to the concurrently-received variables determining or explaining such values or risks of the sports activity, the model comprising a linear regression expression, and wherein the statistically-optimum manner comprises minimizing difference between computed results of the linear regression expression and the received economic value and/or risk variables.

4. The system of any preceding claim, wherein the sports variables describing economic values and/or associated risks comprise one of more of a sales price of the sports activity, a market capitalization of the sports activity, and a value of a revenue stream associated with the sports activity.

5. The system of any preceding claim, wherein the sports activity comprises an activity of one of an individual athlete, or a plurality of individual athletes, or a single sports team, or a plurality of sports teams, of different sports, or a plurality of individual athletes and teams, track, or tennis, or swimming, or soccer, or football, or baseball, or cricket, or hockey, or basketball, or track, or golf, or car racing.

6. The system of any preceding claim, wherein the variables determining or explaining values or risks of the sports activity comprise one or more of attendance at games of the team, media ratings associated with the team, population in a geographic area associated with the team, income of the population in the geographic area associated with the team, geographic proximity other competitive teams, and ratings of members of the sports teams.

7. The system of any preceding claim, wherein the data- storage components comprise a stored representation of the derived SRI model that is retrieved prior to computing subsequent index values.

8. The system of any preceding claim, wherein the communication interfaces communicate with the index-determining system for receiving values of the SRIs identified by the stored financial instruments in order to derive values for the stored instruments.

9. The system of claim 8, wherein one or more financial instruments obligate the parties to the instruments to transfer between themselves a value as specified by the stored financial instrument record, and wherein the transferred value is specified by any one or more of the group comprising: multiplying a determined notional factor by a determined value of the SRI identified by the instrument; and multiplying a determined notional factor by the difference between a current value and a determined strike-value of the SRI identified by the instrument.

10. The system of any preceding claim, wherein the databases further comprise records representing a plurality of differed types of tradable financial instruments identifying a plurality of different, SRIs reflecting economic values and/or associated risks of a plurality of different sports activities.

11. The system of any preceding claim, wherein the communication interfaces communicate with user terminals to receive from users buy and sell orders.

12. The system of claim 11, wherein the communication interfaces further communicate with user terminals to display pending buy and sell orders and the results of matched buy and sell orders.

13. The system of claim 12, wherein the communication interfaces further communicate with user terminals to display characteristics of the stored financial instruments and values of the specified SRIs.

14. The system of any preceding claim, wherein the user interfaces, exchange system, clearinghouse system and index agent system are configured to directly and/or indirectly communicate with one another, across one or more networks from the group comprising: one or more fixed or wireless local area networks (LANs); wide area networks (WAN); the Internet; one or more wireline networks; and one or more wireless voice networks; and wherein the system comprises respective processing apparatuses or terminals as front-end interfaces to the exchange system through which contracts can be communicated with the exchange, and wherein the clearinghouse acts as a universal counterparty to the contracts, and wherein the user terminals, exchange system, clearinghouse system and index agent system comprise any one or more of the group comprising: a portable computer; a laptop computer; a desktop computer; a server computer; a mobile telephone; a portable digital assistant (PDA).

15. A method for facilitating management of risk of a sports-associated enterprise having a commercial activity varying at least in part with the economic values of a sports activity, the method comprising: establishing an account for the enterprise holding one or more tradable financial instruments by sending buy orders, or sell orders, or both buy and sell orders to an exchange system for facilitating management of sports-associated economic risk according to any of claims 1 to 14, the tradable financial instruments having values derived from an index reflecting economic values and/or associated risks of the sports activity; and updating the account by sending further buy orders, sell orders, or both buy and sell orders to the exchange system, wherein changes in the value of the account reflect changes in the specified sports-risk index, and thereby, also changes in the commercial activity of the enterprise.

## FIG. 1.

## FIG. 2.

FIG. 3.

STEP 1 — ADDITIONAL VARIABLES (37), COMPETITION VARIABLES (34), POPULATION & INCOME VARIABLES (32), ATTENDANCE & RELATED VARIABLES (30)

STEP 2 — LINEAR REGRESSION MODEL (38)

STEP 3 — OLS COEFFICIENT DETERMINATION (40)

STEP 4 — MODEL ADJUSTMENT (44), ADJUSTMENT VARIABLES (e.g., media ratings) (42)

STEP 5 — STORED SRI MODEL (46)

STOP

FIG. 4.

Sport Risk Index During 2007 For Selected MLB Franchises

FIG. 5.

EP 2 741 251 A1

Arizona Diamondbacks

━━ Arizona Diamondbacks

## FIG. 6.

**Region/Sports selection (04-01-07)**

| Worldwide | | North America | |
|---|---|---|---|
| . . . | . . . | Baseball | 536 |
| . . . | . . . | Football | 725 |
| | | Basketball | 515 |
| **Europe** | | Hockey | 498 |
| Soccer | 587 | | |
| . . . | . . . | | |

FIG. 7A.

**US Baseball (04-01-07); AmericanLeague**

| SRI | Select team and type | | |
|---|---|---|---|
| 515.83 | Baltimore | Ftrs | Optns |
| 725.61 | Boston | Ftrs | Optns |
| 450.23 | Chicago | Ftrs | Optns |
| . | . | . | . |
| . | . | . | . |
| . | . | . | . |
| 486.89 | Toronto | Ftrs | |

FIG. 7B.

**Oakland Athletics Futures Contracts (04-01-07)**

| Closing | Bid | Asked |
|---|---|---|
| Apr. 31 | 398.34 | 398.56 |
| May 31 | 396.65 | 397.55 |
| Jun. 30 | 395.50 | 396.05 |
| . | . | . |
| . | . | . |
| . | . | . |
| Nov. 31 | 388.42 | 390.00 |

FIG. 7C.

## FIG. 7D.

Order Entry
(04-01-07)

| Team | Oakland Athletics |
| Contract | Future – Jun. 30 |
| Price | 395.75 |
| Quantity | 10 | Options |
| Action | Sell | Buy |
| Submit | Reset |

FIG. 7D.

## FIG. 7E.

Oakland Athletics Future – Jun. 30
Order Book (04-01-07)

| Price | 396.45 | 396.92 | 397.10 |
|---|---|---|---|
| Bid Q | | | |
| Asked Q. | 25 | 10 | 5 |

| Price | 395.50 | 396.05 |
|---|---|---|
| Bid Q | 15 | |
| Asked Q. | | 20 |

| Price | 394.65 | 394.80 | 395.05 |
|---|---|---|---|
| Bid Q | 30 | 10 | 25 |
| Asked Q. | | | |

FIG. 7E.

## FIG. 7F.

Purchase Confirmation
(04-01-07)

| Team | Oakland Athletics |
| Contract | Future – Jun. 30 |
| Price | 395.75 |
| Quantity | 10 |
| Status | Executed/stored |
| Portfolio | 8YQ38259 |

FIG. 7F.

**EP 2 741 251 A1**

Europäisches
Patentamt

European
Patent Office

Office européen
des brevets

## EUROPEAN SEARCH REPORT

Application Number

EP 14 15 6138

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods (OJ 11/2007; p592f) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-15 | INV. G06Q40/04 G06Q10/06 G06Q40/06 TECHNICAL FIELDS SEARCHED (IPC) G06Q |

The present search report has been drawn up for all claims

| Place of search | Date of completion of the search | Examiner |
|---|---|---|
| The Hague | 30 April 2014 | Tiago Pinheiro |

EPO FORM 1503 03.82 (P04C01)

Europäisches
Patentamt

European
Patent Office

Office européen
des brevets

**EUROPEAN SEARCH REPORT**

Application Number

EP 14 15 6138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. *<br>----- | | |
| | | | **TECHNICAL FIELDS SEARCHED (IPC)** |

The present search report has been drawn up for all claims

| Place of search | Date of completion of the search | Examiner |
|---|---|---|
| The Hague | 30 April 2014 | Tiago Pinheiro |

EPO FORM 1503 03.82 (P04C01)